Europäisches Patentamt

European Patent Office

Office européen des brevets

(11) Veröffentlichungsnummer: **0 074 504**
**B1**

(12) **EUROPÄISCHE PATENTSCHRIFT**

(45) Veröffentlichungstag der Patentschrift:
24.10.84

(51) Int. Cl.³: **C 01 C 3/02, B 01 J 19/00**

(21) Anmeldenummer: **82107523.1**

(22) Anmeldetag: **18.08.82**

(54) Rohrofen zur Durchführung von Gasreaktionen.

(30) Priorität: **03.09.81 DE 3134851**

(43) Veröffentlichungstag der Anmeldung:
**23.03.83 Patentblatt 83/12**

(45) Bekanntmachung des Hinweises auf die Patenterteilung:
**24.10.84 Patentblatt 84/43**

(84) Benannte Vertragsstaaten:
**AT BE CH DE FR GB IT LI NL SE**

(56) Entgegenhaltungen:
**BE - A - 543 991**
**CH - A - 306 637**
**CH - A - 405 253**
**DE - B - 1 041 476**
**DE - B - 1 281 406**
**DE - C - 1 000 791**
**FR - A - 2 174 829**
**US - A - 2 688 531**

(73) Patentinhaber: **Degussa Aktiengesellschaft,
Weissfrauenstrasse 9, D-6000 Frankfurt am Main 1 (DE)**

(72) Erfinder: **Brück, Heinz, Lerchenweg 31, D-6238 Hofheim
(Ts) (DE)**

ACTORUM AG

## Beschreibung

Die Erfindung betrifft einen Rohrofen für die Durchführung von Gasreaktionen, insbesondere für die Herstellung von Blausäure nach dem BMA-Verfahren, bei dem die einzelnen Bauteile unter energetischen und sicherheitstechnischen Aspekten in besonderer Weise zueinander und nebeneinander angeordnet sind. Die bisher bekannten Rohröfen für die Durchführung von Gasreaktionen, insbesondere bei Temperaturen über 900° C, z.B. bei Temperaturen zwischen 1000 und 1500° C, bestehen aus einer Reihe parallel geschalteter Kammern, die mit frei aufgehängten keramischen Rohren bzw. Rohrbündeln bestückt sind. Jede dieser Kammern wird für sich beheizt. Der Rauchgasabzug erfolgt über einen gesonderten Stichkanal, der über Abzugshauben mit den einzelnen Kammern verbunden ist. Den senkrecht angeordneten keramischen Rohren, deren Inneres den eigentlichen Reaktionsraum darstellt, wird die für die Reaktion erforderliche Wärme durch die Rohrwände zugeführt, so dass die Kammern entsprechend temperaturbeständig ausgekleidet sein müssen. Die Wärme wird durch Gas- oder Ölbrenner erzeugt. Die Verbrennungsluft wird rekuperativ aufgeheizt. Die Brenner, von denen pro Kammer 2 Stück benötigt werden, sind im unteren Bereich der Kammer angeordnet, damit möglichst die gesamte Länge der Reaktionsrohre auf die erforderliche Reaktionstemperatur gebracht werden kann. Die Wärme der austretenden Rauchgase kann für die Luftvorwärmung und/oder für die Dampferzeugung ausgenutzt werden.

Bei mehreren Öfen ist es möglich, je zwei Öfen an einen gemeinsamen Stichkanal, der dann zwischen diesen beiden Öfen angeordnet ist, anzuschliessen und über einen Sammelkanal mit Hilfe eines Saugzuggebläses den Wärmeinhalt des Rauchgases in einem Abhitzekessel zur Herstellung von Dampf auszunützen.

Die Rekuperatoren für die Vorwärmung der Verbrennungsluft sind jeweils zwischen zwei Kammern angeordnet und werden praktisch parallel zu den Reaktionsrohren aufgeheizt (DE-C Nr. 1041476).

Nachteilig fällt bei diesen aber ins Gewicht, dass pro Kammer zwei Brenner benötigt werden, so dass bei Vorhandensein einer Vielzahl von Kammern eine noch grössere Anzahl von Brennern bedient und eingestellt werden müssten. Dies ist nicht unproblematisch, da ja der Verbrennungsvorgang und damit die Einstellung der Reaktionstemperatur stark von der Fahrweise der Brenner beeinflusst wird. Dies ist u.a. insbesondere dadurch erschwert, dass die frei hängenden Reaktionsrohre unten nur unvollständig gegenüber der unteren Ofenabdeckung abgedichtet werden können.

Ein weiterer Nachteil dieser vorbekannten Öfen ist ihre recht grosse äussere Oberfläche, die zu Energieverlusten führt.

Diese Nachteile werden durch die erfindungsgemässen Öfen vermieden. Ausserdem wird durch eine andere Anordnung der Rekuperatoren eine höhere Vorwärmung der Verbrennungsluft und damit eine bessere Abkühlung der Rauchgase erzielt.

Gegenstand der Erfindung ist ein Rohrofen für die Durchführung von Gasreaktionen, insbesondere für die Herstellung von Blausäure nach dem BMA-Verfahren, in keramischen Rohrbündeln, die innerhalb des Ofens in Heizkammern frei hängend angeordnet sind und wobei der Ofen als wesentliche Teile Brenner, einen Rauchgas-Stichkanal und Rekuperatoren aufweist, der dadurch gekennzeichnet ist, dass der Ofen im wesentlichen einen gemauerten, aussen mit einer Metallkonstruktion versehenen Quader oder Würfel 1 darstellt, der mindestens zwei zwillingsartig zueinander angeordnete, die keramischen Rohrbündel aufnehmende Heizkammern 2 mit zur Ofenmitte hin daran anschliessend angeordneten Rekuperatorräumen 3 mit Rekuperatoren 4 sowie einen zwischen den Rekuperatorräumen 3 angeordneten Rauchgas-Stichkanal 5 in Form einer baulichen Einheit aufnimmt, und wobei jede Heizkammer 2 maximal nur einen Brenner 9 aufweist.

Eine günstige Ausgestaltung des erfindungsgemässen Verfahrens besteht darin, dass zwischen den Heizkammern 2 und den Rekuperatorräumen 3 vorzugsweise mit Steuerorganen 6 versehene Rauchgasführungen 7 angeordnet sind, die vorzugsweise die Rauchgase der Heizkammern in der Nähe der oberen Ofenabdeckung aufnehmen und diese vorzugsweise von unten in die Rekuperatorräume einführen.

Eine weitere Verbesserung wird dadurch erzielt, dass die Rekuperatorräume 3 sowie die dazugehörigen Rekuperatoren 4 so dimensioniert und angeordnet sind, dass sie eine oder mehrere nebeneinander angeordnete Heizkammern 2 versorgen.

Schliesslich ist es noch vorteilhaft, den Ofen so zu gestalten, dass im Rauchgas-Stichkanal ein oder mehrere Wärmeaustauscher für die Verbrennungsluft angeordnet sind.

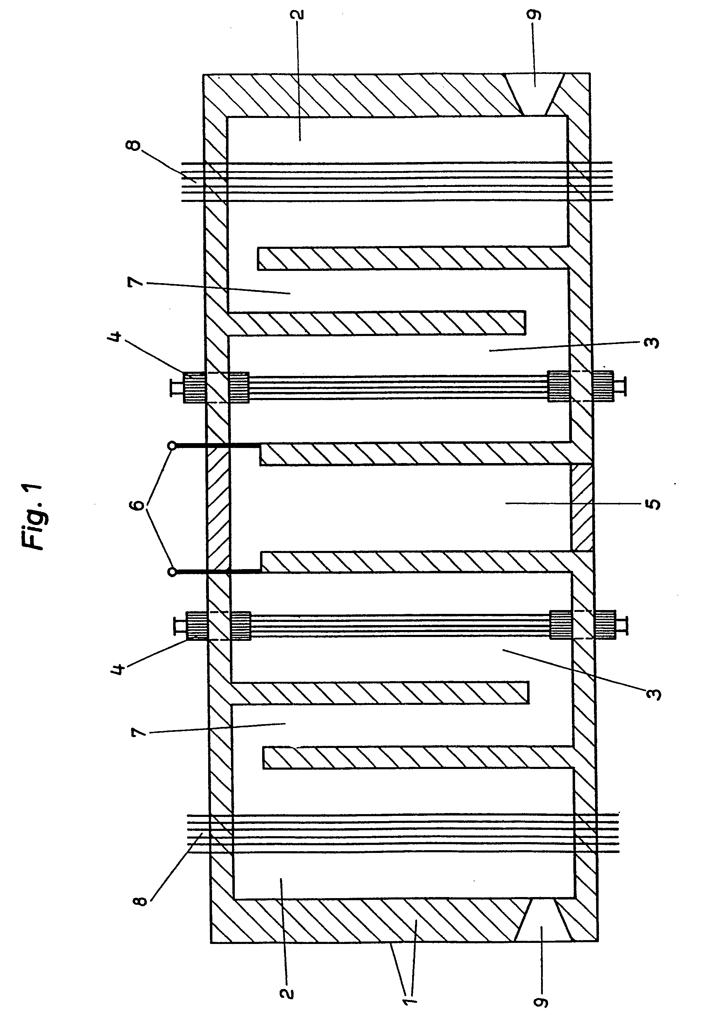

Die angefügte Abb. 1 gibt einen schematisch gezeichneten Querschnitt des Ofens durch eine Zwillingskammer und die dazugehörenden Teile wieder. Es ist zu erkennen, dass unter der zwillingsartigen Anordnung eine januskopfartige Anordnung zu verstehen ist. In ihr bedeuten 1 den quader- bzw. würfelförmig gestalteten Gesamtofen, bestehend aus der Ausmauerung mit temperaturbeständigem, feuerfestem Material und einer Ummantelung, z.B. aus Blech, 2 die Heizkammern, 3 einen Rekuperatorraum mit dem dazugehörenden Rekuperator 4, 5 den Rauchgas-Stichkanal, 7 die Rauchgasführungen und 6 die an sich bekannten Steuerorgane für die Rauchgasführungen, 8 stellen die keramischen Reaktionsrohre und 9 die Brenner dar. Derartige Zwillingseinheiten können in beliebiger Anzahl hintereinander in Reihenbauweise angeordnet sein.

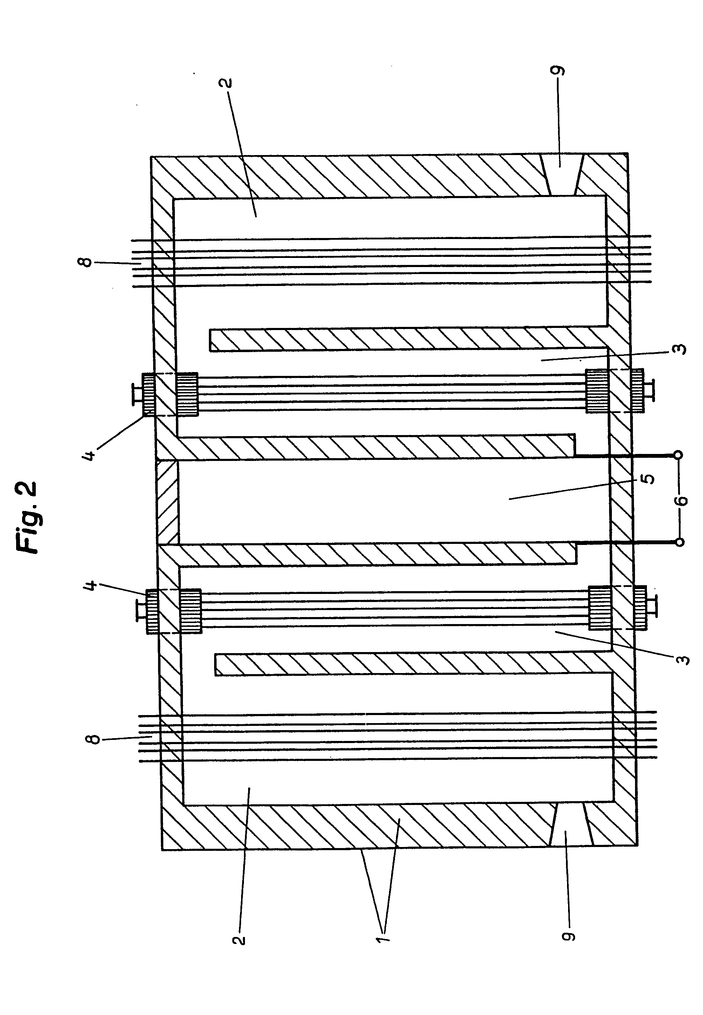

Eine weitere Ausgestaltung des erfindungsgemässen Ofens gemäss Anspruch 1 ist in der Abb. 2 wiedergegeben, wobei die Bezugszahlen die gleiche Bedeutung wie in Abb. 1 haben.

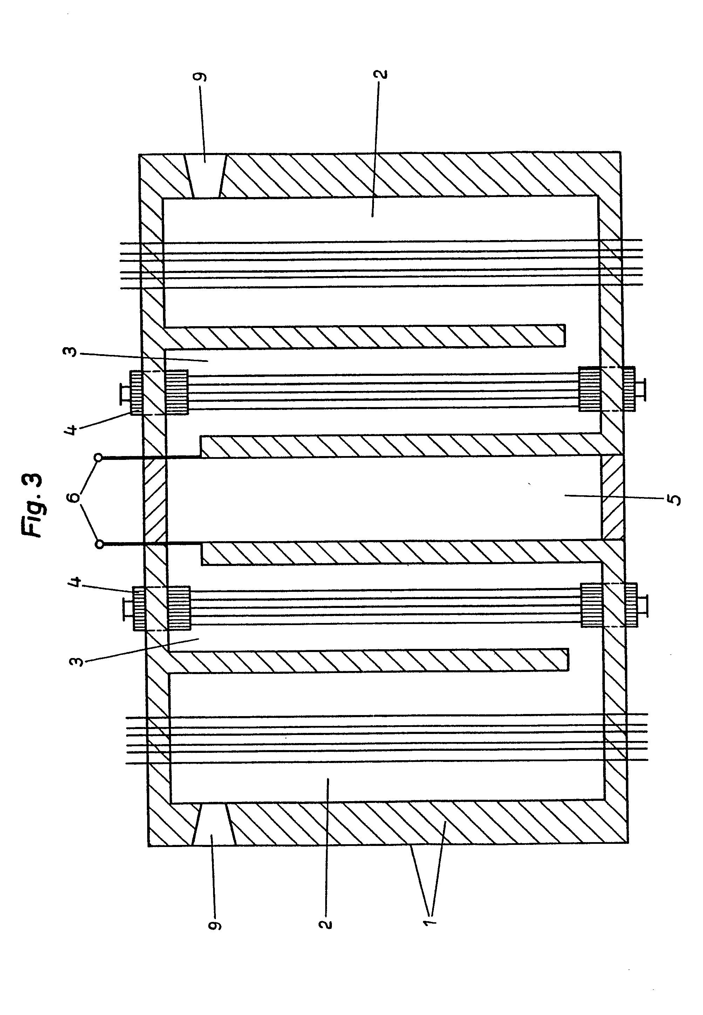

Schliesslich wird durch Abb. 3 eine Ausgestaltung des erfindungsgemässen Ofens wiedergegeben, bei der, ebenso wie in der Ausgestaltung gemäss Abb. 2, die Rauchgasführungen 7 weggelassen sind und die Brenner 9 im oberen Teil der Heizkammer 2 angeordnet sind, so dass die Beheizung der Rohrbündel im Gegenstrom erfolgt. Die Rauchgase der Heizkammern 2 werden in diesem Falle in der Nähe der unteren Böden abgezogen und den Rekuperatorräumen von unten zugeführt. Die Bezugszahlen haben hier wiederum die gleichen Bedeutungen wie in Abb. 1.

Im Rahmen dieser Erfindung ist es auch möglich, 2 oder mehrere Heizkammern mit nur einem Brenner zu versorgen.

Durch die besondere Führung der Rauchgase wird erreicht, dass eine weitere Nutzung ihres Wärmeinhaltes erst dann erfolgt, wenn die eigentliche Reaktionsarbeit bereits geleistet ist.

Die Rekuperatoren selbst können während des Betriebes der benachbarten Kammern ohne Nachteile für diese ausgewechselt werden. Durch diese Anordnung ist es ausserdem möglich, die Kammer mit neuen Rohren zu bestücken und für diesen Zeitraum den Luftdurchtritt durch Rekuperator und Brenner zu drosseln oder ganz abzustellen. Ermöglicht wird dieses durch die Anordnung von Steuerorganen am Rauchgaseintritt in den Rauchgas-Stichkanal.

Der Rauchgas-Stichkanal 5 ist zwischen den Rekuperatorräumen als durchgehender Kanal angeordnet. Er benötigt lediglich eine obere und untere Abdeckung.

Die herkömmliche Bauweise von z.B. 2 Stück 10-Kammer-Öfen einschliesslich der erforderlichen Rauchgas-Übergangsstücke und einschliesslich des erforderlichen Stichkanals ergibt eine abstrahlende Oberfläche von ca. 200 m². Die erfindungsgemässen Öfen weisen demgegenüber eine Oberfläche von nur 100 m² auf, wobei im Bereich des Stichkanals wesentlich niedrigere Temperaturen auftreten.

Durch die Erfindung verringert sich ausserdem das Ofenhaus-Volumen. Bei der herkömmlichen Ausführung von z.B. 16 Öfen wurde ein Ofenhaus von etwa 21 000 m³ unbautem Raum, nach der Erfindung von etwa 12 500 m³, benötigt.

Ausser den sich ergebenden Energieeinsparungen sind auch wesentlich geringere Bakosten gegeben.

Der Rauchgas-Stichkanal, in dem die Rauchgase der Heizkammern gesammelt werden, ist zwischen den Kammern angeordnet, wodurch sich eine erhebliche Platzersparnis sowie eine geringe abstrahlende Oberfläche ergibt. Die beiden Wände des Kanals werden jeweils von den Rekuperatorkammern gebildet, so dass nur noch eine untere und obere Abdeckung erfolgen muss.

Durch diese Anordnung entfallen die früher erforderlichen Übergangsstücke zwischen jeder Kammer und dem Stichkanal.

In diesem Rauchgas-Stichkanal kann die Luft zusätzlich — ehe sie dem oder den Rekuperator(en) zugeführt wird — mit Hilfe von dort eingebauten Wärmetauschern Rauchgas/Luft vorgewärmt werden.

Der so angeordnete Stichkanal hat z.B. an der oberen und unteren Abdeckung nur noch eine Oberfläche von etwa 12 m², während vergleichsweise der Stichkanal der vorbekannten Öfen einschliesslich der Übergangsstücke etwa 60 m² abstrahlende Oberfläche aufzuweisen hatte.

## Patentansprüche

1. Rohrofen für die Durchführung von Gasreaktionen, insbesondere für die Herstellung von Blausäure nach dem BMA-Verfahren, in keramischen Rohrbündeln, die innerhalb des Ofens in Heizkammern frei hängend angeordnet sind und wobei der Ofen als wesentliche Teile Brenner, einen Rauchgas-Stichkanal und Rekuperatoren aufweist, dadurch gekennzeichnet, dass der Ofen im wesentlichen einen gemauerten, aussen mit einer Metallkonstruktion versehenen Quader oder Würfel (1) darstellt, der mindestens zwei zwillingsartig zueinander angeordnete, die keramischen Rohrbündel aufnehmende Heizkammern (2) mit zur Ofenmitte hin daran anschliessend angeordneten Rekuperatorräumen (3) mit Rekuperatoren (4) sowie einen zwischen den Rekuperatorräumen (3) angeordneten Rauchgas-Stichkanal (5) in Form einer baulichen Einheit aufnimmt, und wobei jede Heizkammer (2) maximal nur einen Brenner (9) aufweist.

2. Rohrofen nach Anspruch 1, dadurch gekennzeichnet, dass zwischen den Heizkammern (2) und den Rekuperatorräumen (3) vorzugsweise mit Steuerorganen (6) versehene Rauchgasführungen (7) angeordnet sind, die vorzugsweise die Rauchgase der Heizkammern (2) in der Nähe der oberen Ofenabdeckung aufnehmen und diese vorzugsweise von unten in die Rekuperatorräume (3) einführen.

3. Rohrofen nach einem der Ansprüche 1 oder 2, dadurch gekennzeichnet, dass die Rekuperatorräume (3) sowie die dazugehörigen Rekuperatoren (4) so dimensioniert und angeordnet sind, dass sie eine oder mehrere nebeneinander angeordnete Heizkammern (2) versorgen.

4. Rohrofen nach den Ansprüchen 1 bis 3, dadurch gekennzeichnet, dass im Rauchgas-Stichkanal ein oder mehrere Wärmeaustauscher für die Verbrennungsluft angeordnet sind.

## Claims

1. A tubular furnace for carrying out gas reactions and in particular for producing hydrogen cyanide by the BMA process in ceramic banks of tubes which hang freely inside the furnace in heating chambers, the furnace having, as essential parts, burners, a flue-gas branch-channel and recuperators, characterised in that the furnace is essentially a walled cuboid or cube (1) the outside of which is of metal construction and accomodates at least two heating chambers (2) which are arranged in the manner of twins with respect to each other and accommodate the ceramic banks of tubes and have adjoining recuperating chambers (3) which extend towards the middle of the furnace, which recuperating chambers have recuperators (4) and a flue-gas branch-channel (5) in the form of a structural unit, each heating chamber (2) having at most only one burner (9).

2. A tubular furnace according to Claim 1, characterised in that flue-gas guiding devices (7) which are preferably provided with control members (6) are arranged between the heating chambers (2) and the recuperating chambers, which guiding devices (7) preferably admit the flue-gases of the heating chambers (2) near the top covering of the furnace and preferably guide them upwards into the recuperating chambers (3).

3. A tubular furnace according to one of Claims 1 or 2, characterised in that the recuperating chambers (3) and the associated recuperators (4) are dimensioned and arranged in such a manner that they supply one or more heating chambers (2) which are arranged adjacently to one another.

4. A tubular furnace according to Claims 1 to 3, characterised in that one or more heat-exchangers for the air for combustion are located in the flue-gas branch-channel.

## Revendications

1. Four à tubes pour la réalisation de réactions en phase gazeuse, en particulier pour la préparation d'acide cyanhydrique selon le procédé BMA, dans des faisceaux de tubes céramiques suspendus librement à l'intérieur du four dans des chambres de chauffe, les pièces principales du four étant constituées par les brûleurs, un canal d'évacuation des fumées et des récupérateurs, four à tubes caractérisé en ce que le four est essentiellement constitué par un parallélépipède ou un cube (1) en maçonnerie réfractaire, muni à l'extérieur d'une structure métallique, qui comporte au moins deux chambres de chauffe (2) jumelées recevant le faisceau de tubes céramique, avec des chambres de récupération (3) faisant suite, disposées au centre du four, comportant des récupérateurs (4), ainsi qu'un canal d'évacuation des fumées (5) placé entre les chambres des récupérateurs (3) sous la forme d'un ensemble de construction, chaque chambre de chauffe (3) étant munie au maximum d'un brûleur (9).

2. Four à tubes selon la revendication 1, caractérisé en ce qu'entre les chambres de chauffe (2) et les chambres des récupérateurs (3) se trouvent disposées des conduites de fumées (17), munies de préférence d'organes de commande (6), qui reçoivent de préférence les fumées des chambres de chauffe (2) au voisinage du recouvrement supérieur du four et les introduisent de préférence par le bas dans les chambres des récupérateurs (3).

3. Four à tubes selon l'une des revendications 1 ou 2, caractérisé en ce que les chambres des récupérateurs (3) ainsi que les récupérateurs (4) afférents ont des dimensions et sont disposés de telle façon qu'ils alimentent une ou plusieurs chambres de chauffe (2) montées les unes à côté des autres.

4. Four à tubes selon les revendications 1 à 3, caractérisé en ce que, dans le canal d'évacuation des fumées, on dispose un ou plusieurs échangeurs de chaleur pour l'air de combustion.

Fig. 1

**Fig. 2**

Fig. 3